# EUROPEAN PATENT APPLICATION

(11) **EP 2 498 208 A1**
(43) Date of publication of application: **12.09.2012**
(21) Application number: 09851064.7
(22) Date of filing: 04.11.2009
(51) Int. Cl.: G06Q 10/00

(54) **COST PRICE CALCULATION DEVICE, COST PRICE CALCULATION METHOD, AND COST PRICE CALCULATION PROGRAM**

(71) Applicant: Toyama, Takayuki, Kawasaki-shi, Kanagawa 216-0033 (JP)
(72) Inventor: Toyama, Takayuki, Kawasaki-shi, Kanagawa 216-0033 (JP)
(74) Representative: Pitchford, James Edward
(86) International application number: PCT/JP2009/005848
(87) International publication number: WO 2011/055404

(57) **Abstract**

The three values of the activity amount, the unit cost, and the total amount can be efficiently calculated with high versatility while having additional features.

A cost calculation device (10) executes a cost calculation using a principle of a structure matrix including an upper side portion, a left side portion, and a central portion and includes a production information storage unit (F2) for storing production information in which a production item, a production activity amount, and a production unit cost are associated, an investment information storage unit (F3) for storing investment information in which an investment item, an investment activity amount, and an investment unit cost are associated, and a ratio information storage unit (F4) for storing ratio information representing a ratio of the investment activity amount invested in the production activity amount to the production activity amount. The cost calculation device (10) is configured to have a predetermined link relation (for example, a link relation of a horizontal sum of vertical products and a link relation of a vertical sum of horizontal products) and generate a structure matrix in which production information is arranged in an upper side portion, investment information is arranged in a left side portion, and ratio information is arranged in a central portion, to generate a domain using the structure matrix, and to output the generated domain.

## Description

### Technical Field

The present invention relates to a cost calculation device and a cost calculation method for calculating a cost in which the consumption of management resources necessary for management activities such as a product activity and a service activity including an intermediate process is reflected, and a cost calculation program for operating and controlling the cost calculation device.

### Background Art

For business management, in each of investment and production activity amounts to be linked, it is generally required to provide three values of an "activity amount," a "unit cost" corresponding to an investment cost at the end, and a "total amount" which is the product of the investment activity amount and the unit cost. Here, the "activity amount" is the amount corresponding to the amount of practical business grasped mainly as non-monetary activities such as the number of products, an intermediate part, a processing operation time, energy, and work waste which are necessary to perform field works such as production, conveyance, and services of products or intermediate products in companies or the like which are targets of business management. The activity amount represents a variety of information related activities which sequentially become the causes of the cost in the process of activity, become the causes of the cost which is the monetary value sequentially necessary for works such as production of products by investment and consumption of management resources, and relate to activities having an influence on business management.

In the past, various kinds of calculation devices that perform a cost calculation for calculating the three values have been provided (for example, see Patent Literature 1). These calculation devices have been used to obtain important information used for business management.

### Citation List

### Patent Literature

Patent Literature 1: Japanese Patent Application Laid-Open No. 2002-288278

### Summary of Invention

### Technical Problem

However, in the conventional calculation devices, due to complicated management phenomena including various factors, various varieties, and various processes, it is difficult to investigate explicitly and sequentially a cause-and-effect relation of a cost driver, and it is difficult to perform a minute investigation. Further, it is difficult to efficiently follow a change in the activity amount acting on the cost and perform processing. As described above, there has been a problem in that there is no high-versatile calculation device which is capable of accurately estimating and efficiently calculating the three values of the activity amount, the unit cost, and the total amount.

In order to solve the above-mentioned problems, it is an object of the invention to efficiently calculate the three values of the activity amount, the unit cost, and the total amount with high versatility while having additional features.

### Solution to Problem

A cost calculation device of the present invention executes a cost calculation using a principle of a structure matrix including an upper side portion, a left side portion, and a central portion and includes a production information storage unit for storing production information in which a production item, a production activity amount, and a production unit cost are associated, an investment information storage unit for storing investment information in which an investment item, an investment activity amount, and an investment unit cost are associated, a ratio information storage unit for storing ratio information representing a ratio of the investment activity amount invested in the production activity amount to the production activity amount, a structure matrix generating unit for generating a structure matrix in which the production information is arranged in the upper side portion, the investment information is arranged in the left side portion, and the ratio information is arranged in the central portion, the structure matrix having a predetermined link relation, a domain generating unit for generating a domain using the structure matrix, and a domain output unit for outputting the domain generated by the domain generating unit,
wherein the structure matrix generating unit generates a first structure matrix in which the production activity amount is arranged in an upper side portion, the investment activity amount is arranged in a left side portion, and a matrix including the ratio as an element is arranged in a central portion, the first matrix having a link relation of a horizontal sum of vertical products, and generates a second structure matrix in which the production unit cost is arranged in an upper side portion, the investment unit cost is arranged in a left side portion, and a matrix including the ratio as an element is arranged in a central portion, the second matrix having a link relation of a vertical sum of horizontal products, and the domain generating unit generates an activity amount domain representing an investment amount of the investment activity amount on the production activity amount using the first structure matrix, generates a unit cost domain representing a unit cost of an investment item invested in the production item using the second structure matrix, and generates an individual total amount domain that represents a production total amount, an investment total amount, and a breakdown of the investment total amount in the production total amount using the activity amount domain and the unit cost domain.

Through the above configuration, it is possible to efficiently calculate the three values of the activity amount, the unit cost, and the total amount with high versatility while having additional features. Further, a cost calculation can be performed by a simple matrix calculation having a low processing load, and an output can be collectively performed.

The cost calculation device may further include a structure matrix storage unit for storing a plurality of structure matrices, and a structure matrix configured such that a plurality of structure matrices are combined may be included among the plurality of structure matrices.

The domain generating unit may generate the activity amount domain by calculating a product of an element configuring the matrix arranged in the central portion and the production activity amount arranged in the upper side portion in the first structure matrix, replacing the matrix having the ratio arranged in the central portion as an element in the first structure matrix with a matrix having the product as an element, and converting the link relation of the horizontal sum of vertical products into a link relation of a horizontal product, generate the unit cost domain by replacing an element configuring the matrix arranged in the central portion in the second structure matrix with the corresponding investment unit cost, and erasing a link relation a vertical sum of horizontal products, and generate the individual total amount domain by calculating a product of corresponding values of the activity amount domain and the unit cost domain.

The cost calculation device may further include a structure matrix editing unit for combining, converting, or separating a plurality of structure matrices and generates a new structure matrix.

The production activity amount may include the number of products, the investment activity amount may include the number of necessary parts and the number of man-hours, the production unit cost may include a product unit cost, the investment unit cost may include a necessary part unit cost and a man-hour unit cost, a used amount of an investment amount in the production amount may include a breakdown of the number of necessary parts of each product and a breakdown of an activity amount of each product, the production total amount may include a product total amount, the investment total amount may include a necessary part total amount and a man-hour total amount, and the breakdown of the investment total amount in the production total amount may include a breakdown of the necessary part total amount and the man-hour total amount on the product total amount of each production item.

A cost calculation method of the present invention executes a cost calculation using a principle of a structure matrix including an upper side portion, a left side portion, and a central portion and includes a structure matrix generating process of generating a structure matrix in which production information stored in a production information storage unit that stores production information in which a production item, a production activity amount, and a production unit cost are associated is arranged in an upper side portion, investment information stored in an investment information storage unit that stores investment information in which an investment item, an investment activity amount, and an investment unit cost are associated is arranged in a left side portion, and a matrix having a ratio as an element represented by ratio information stored in a ratio information storage unit that stores ratio information representing a ratio of the investment activity amount invested in the production activity amount to the production activity amount is arranged in a central portion, the structure matrix having a predetermined link relation, a domain generating process of generating a domain using the structure matrix, and a domain output process of outputting a domain generated by the domain generating process, wherein the structure matrix generating process includes generating a first structure matrix in which the production activity amount is arranged in the upper side portion, the investment activity amount is arranged in the left side portion, and a matrix including a ratio represented by the ratio information as an element is arranged in the central portion, the first matrix having a link relation of a horizontal sum of vertical products, and generating a second structure matrix in which the production unit cost is arranged in the upper side portion, the investment unit cost is arranged in the left side portion, and a matrix including the ratio as an element is arranged in the central portion, the second matrix having a link relation of a vertical sum of horizontal products, and the domain generating process includes generating an activity amount domain representing an investment amount of the investment activity amount on the production activity amount using the first structure matrix, generating a unit cost domain representing a unit cost of an investment item invested in the production item using the second structure matrix, and generating an individual total amount domain that represents a production total amount, an investment total amount, and a breakdown of the investment total amount in the production total amount using the activity amount domain and the unit cost domain.

A cost calculation program of the present invention operates and controls a cost calculation device and causes the cost calculation device to execute a structure matrix generating process of generating a structure matrix in which production information stored in a production information storage unit that stores production information in which a production item, a production activity amount, and a production unit cost are associated is arranged in an upper side portion, investment information stored in an investment information storage unit that stores investment information in which an investment item, an investment activity amount, and an investment unit cost are associated is arranged in a left side portion, and a matrix having a ratio as an element represented by ratio information stored in a ratio information storage unit that stores ratio information representing a ratio of the investment activity amount invested in the production activity amount to the production activity amount is arranged in a central portion, the structure matrix having a predetermined link relation, a domain generating process of generating a domain using the structure matrix, and a domain output process of outputting a domain generated by the domain generating process, wherein the structure matrix generating process includes generating a first structure matrix in which the production activity amount is arranged in the upper side portion, the investment activity amount is arranged in the left side portion, and a matrix including a ratio represented by the ratio information as an element is arranged in the central portion, the first matrix having a link relation of a horizontal sum of vertical products, and generating a second structure matrix in which the production unit cost is arranged in the upper side portion, the investment unit cost is arranged in the left side portion, and a matrix including the ratio as an element is arranged in the central portion, the second matrix having a link relation of a vertical sum of horizontal products, and the domain generating process includes generating an activity amount domain representing an investment amount of the investment activity amount on the production activity amount using the first structure matrix, generating a unit cost domain representing a unit cost of an investment item invested in the production item using the second structure matrix, and generating an individual total amount domain that represents a production total amount, an investment total amount, and a breakdown of the investment total amount in the production total amount using the activity amount domain and the unit cost domain.

### Advantageous Effects of Invention

According to the invention, the three values of the activity amount, the unit cost, and the total amount can be efficiently calculated with high versatility while having additional features. Further, a cost calculation can be performed by a simple matrix calculation having a low processing load, and an output can be collectively performed.

### Brief Description of Drawings

Fig. 1 is a block diagram illustrating a configuration example of a cost calculation device.
Fig. 2 is an explanatory diagram to describe a concept of a structure matrix.
Fig. 3 is an explanatory diagram to describe an example of an editing method of a structure matrix.
Fig. 4 is a flowchart illustrating an example of a cost calculation process.
Fig. 5 is a flowchart illustrating an example of an individual total amount domain generating process.
Fig. 6 is an explanatory diagram to describe a first structure matrix.
Fig. 7 is an explanatory diagram to describe an activity amount domain.
Fig. 8 is a flowchart illustrating an example of a unit cost domain generating process.
Fig. 9 is an explanatory diagram to describe a second structure matrix.
Fig. 10 is an explanatory diagram to describe a unit cost domain.
Fig. 11 is an explanatory diagram to describe an individual total amount domain.
Fig. 12 is an explanatory diagram illustrating a concept of a calculation structure managed by a cost calculation device.
Fig. 13 is an explanatory diagram illustrating a concept of a calculation structure managed by a cost calculation device.
Fig. 14 is an explanatory diagram to describe an investment amount use ratio domain.
Fig. 15 is an explanatory diagram to describe an attribution ratio domain on a unit cost total amount.
Fig. 16 is an explanatory diagram to describe an attribution ratio domain on an individual total amount.
Fig. 17 is an explanatory diagram to describe a common element ratio domain on an individual total amount.

### Description of Embodiments

Hereinafter, an embodiment of the invention will be described with reference to the accompanying drawings.

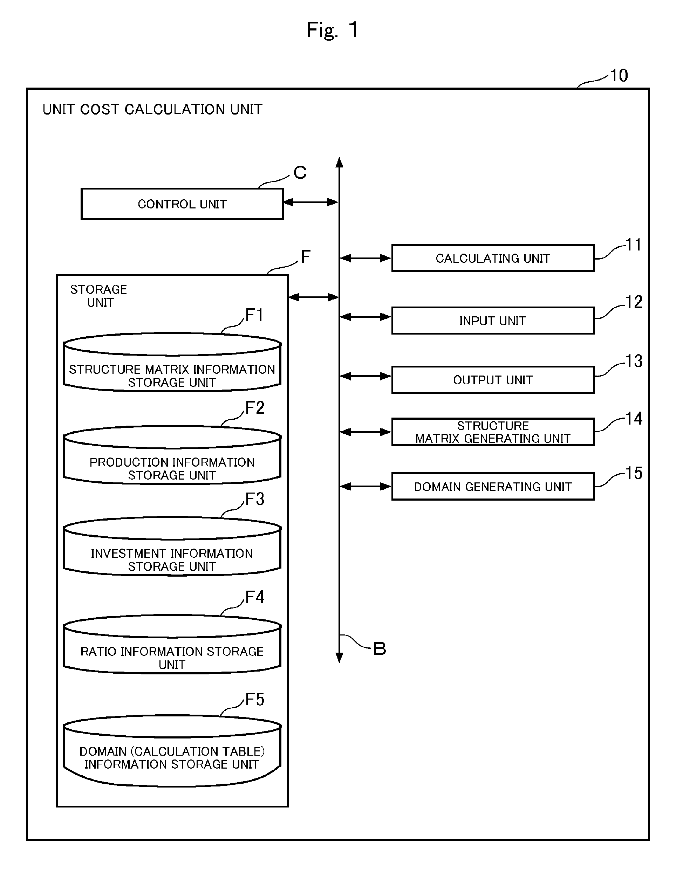

Fig. 1 is a block diagram illustrating a configuration example of a cost calculation device 10 according to the invention. As illustrated in Fig. 1, the cost calculation device 10 includes a control unit C, a calculating unit 11, an input unit 12, an output unit 13, a structure matrix generating unit 14, a domain generating unit 15, and a storage unit F. The components that configure the cost calculation device 10 are connected to a bus B through which a control signal, data, and the like are transmitted.

The control unit C has a function of controlling the components of the cost calculation device 10 according to a computer program (calculation program) stored in the storage unit F and executing various kinds of processes. The control unit C of this example is configured with a central processing unit (CPU), a read only memory (ROM), a random access memory (RAM), and the like.

The calculating unit 11 has a function of executing a calculation process on the basis of information stored in the storage unit F and an instruction or information received by the input unit 12 and executing a calculation process of calculating a predetermined value.

The input unit 12 has a function of receiving a variety of instructions or information input to the cost calculation device 10. In this example, for example, the input unit 12 receives an operation signal corresponding to a user's operation from a keyboard or a mouse connected to the cost calculation device 10.

The output unit 13 outputs information for displaying a display screen corresponding to a calculation result or an operation input on a monitor such as a liquid crystal display device connected to the cost calculation device 10, for example, under control of the control unit C.

The structure matrix generating unit 14 has a function of generating a structure matrix including production information and investment information which will be described later using the principles of the structure matrix.

In this example, the structure matrix includes an upper side portion, a left side portion, and a central portion. In each of the upper side portion and the left side portion, items (an item list) and numerical values corresponding to the items are arranged. In the central portion, a matrix corresponding to the upper side portion and the left side portion is arranged. The numerical values set to the respective portions have a predetermined link relation (a link relation of a horizontal sum of vertical products and a link relation of a vertical sum of horizontal products).

The domain generating unit 15 has a function of generating a domain using various kinds of structure matrices generated by the structure matrix generating unit 14. Here, the "domain" in this example refers to a calculation table (a table from which a calculation theory can be read) that includes an upper side portion, a left side portion, and a central portion, items (an item list) and numerical values are arranged in each of the upper side portion and the left side portion, and a matrix corresponding to the upper side portion and the left side portion is arranged in the central portion, and through the calculation table, a relevance between a value of a calculation process necessary to obtain a numerical value of each part, a resultant value, and the other values and an associated item or numerical value can be output in the form to be easily recognized by human. In this example, the domain generating unit 15 generates a domain, for example, by changing a matrix of the central portion in the structure matrix or by converting or erasing a link relation of the structure matrix. Further, the domain generating unit 15 has a function of generating a new domain by editing a component of a domain.

The storage unit F is a storage medium that stores a calculation program necessary for various calculations or a variety of information. For example, the storage unit F is configured with a non-volatile memory such as the RAM, and stores a variety of information such as information calculated or updated in a calculation procedure or information related to a calculation result. In this example, the storage unit F includes a structure matrix information storage unit F1, a production information storage unit F2, an investment information storage unit F3, a ratio information storage unit F4, and a domain information storage unit F5.

The structure matrix information storage unit F1 is a storage medium that stores structure matrix information which is the basis on which the structure matrix generating unit 14 generates the structure matrix.

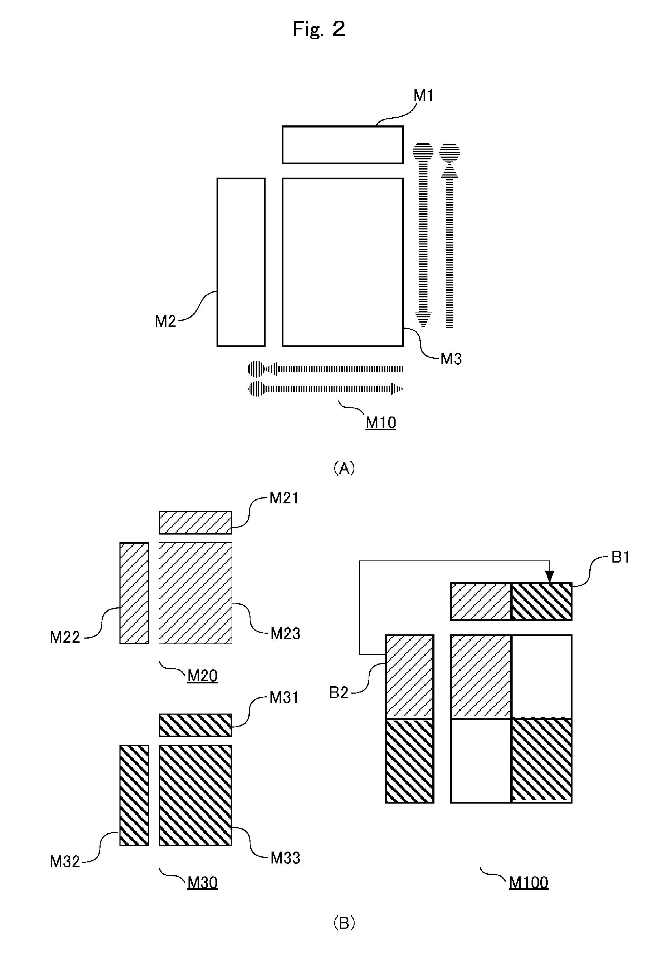

Fig. 2 is an explanatory diagram to describe a concept of the structure matrix in this example. As illustrated in Fig. 2(A), a structure matrix M10 includes an upper side portion M1, a left side portion M2, and a central portion M3. Production information is arranged in the upper side portion M1, investment information on a production amount is arranged in the left side portion M2, and ratio information corresponding to the upper side portion M1 and the left side portion M2 is arranged in the central portion M3. Here, as illustrated in Fig. 2, the central portion M3 is configured in the form of a matrix in which the number of items arranged in the upper side portion corresponds to the number of columns, and the number of items arranged in the left side portion corresponds to the number of rows.

In this example, information arranged in the upper side portion M1, the left side portion M2, and the central portion M3 is one in which an element of an input-output table is extended to a matrix having a plurality of elements based on the principles of the input-output table (inter-industry relations table) (structure matrix). In other words, it is assumed that when information arranged in the upper side portion M1 and the left side portion M2 is regarded as a vector and information arranged in the central portion M3 is regarded as a matrix, the structure matrix information storage unit F1 in this example stores structure matrix information which represents a first structure matrix having a link relation of a horizontal sum of vertical products in which the left side portion M2 is the scalar product of the upper side portion M1 and the central portion M3 (that is, a relation in which a value of the left side portion M2 is obtained by calculating the product of the upper side portion M1 and the central portion M3 in a vertical direction (vertical product) and calculating the sum of the results in a horizontal direction (horizontal sum), and a second structure matrix having a link relation of a vertical sum of horizontal products in which the upper side portion M1 is the scalar product of the left side portion M2 and the central portion M3 (that is, a relation in which a value of the upper side portion M1 is obtained by calculating the product of the left side portion M2 and the central portion M3 in the horizontal direction (horizontal product) and calculating the sum of the results in the vertical direction (vertical sum).

Further, the structure matrix information storage unit F1 may store a structure matrix in which a plurality of structure matrices are combined. In other words, for example, as illustrated in Fig. 2(B), there may be included a structure matrix M100 in which a structure matrix M20 in which production information is arranged in an upper side portion M21, investment information is arranged in a left side portion M22, and ratio information is arranged in a central portion M23 and that has a link relation of a horizontal sum of vertical products is combined with a structure matrix M30 in which investment information is arranged in an upper side portion M31, investment amount information of each acquisition path is arranged in a left side portion M32, and a ratio of a value represented by the investment amount information of each acquisition path to a value represented by investment information is arranged in a central portion M33. Further, in the case in which a plurality of structure matrices are combined, when common information is included in an upper side portion and a left side portion, the information is shared. In other words, when the same information is included in the left side portion M22 of the structure matrix M20 and the upper side portion M31 of the structure matrix M30 in Fig. 2(B), pieces of information managed by portions (hereinafter, referred to as "blocks") B1 and B2 configuring the structure matrix M100 are shared.

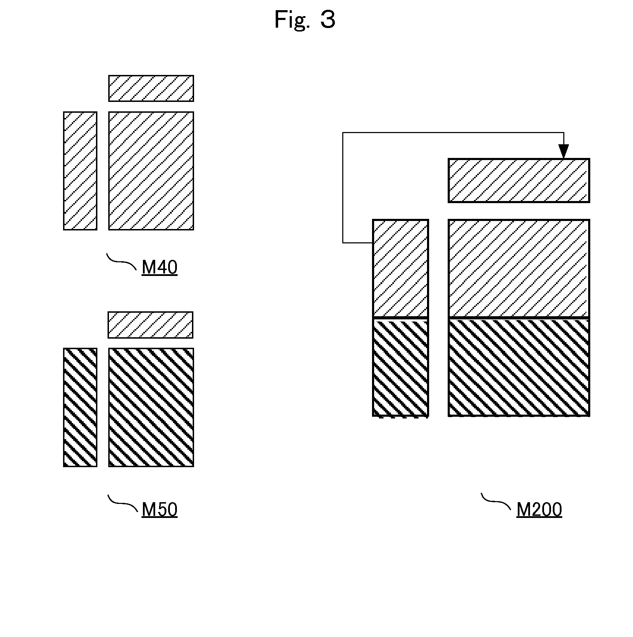

A method of editing the structure matrix is not limited to this example, and for example, when two structure matrices M40 and M50 are different in information in a left side portion and the same in information of an upper side portion as illustrated in Fig. 3, a structure matrix in which the left side portions are combined without changing the upper side portions as illustrated in a structure matrix M200 can be obtained. According to this method, it is possible to convert or separate a block configuring an upper side portion or a left side portion of a structure matrix.

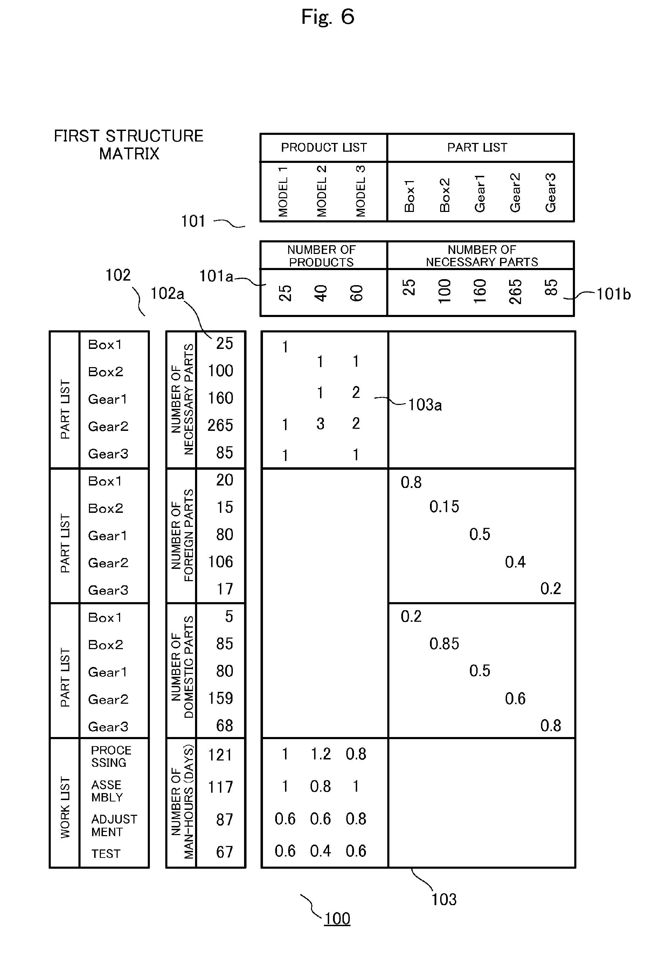

Hereinafter, a description will be made in connection with an example using a structure matrix of the same kind as a structure matrix (see Fig. 6) which includes two blocks in an upper side portion and four blocks in a left side portion.

The production information storage unit F2 is a storage medium that stores production information which is information related to, for example, a product produced as a activity result of a company or the like (hereinafter, referred to as a "user") which is a target of business management. In this example, the production information is information in which a product item, the number of products (production request amount), a product unit cost, a product total amount which are set to one block in an upper side portion of a structure matrix are associated with a part item, the number of necessary parts, a necessary part unit cost, and a necessary part total amount which are managed by another block.

The investment information storage unit F3 is a storage medium that stores investment information related to an investment amount (a necessary investment amount) necessary for the user to obtain a product or the like. In this example, the investment information is information in which a part item and a work item, the number of necessary parts, the number of foreign parts and the number of domestic parts, the number of man-hours, a necessary part unit cost, a foreign part unit cost, a domestic part unit cost, a man-hour unit cost, a necessary part total amount, a foreign part total amount, a domestic part total amount, and a man-hour total amount are associated. Here, the number of man-hours represents the number of works necessary for the production request amount. Alternatively, the number of man-hours may be based on the number of days necessary for works. The man-hour unit cost represents a cost necessary for the number of man-hours of 1. In this example, the number of necessary parts, the necessary part unit cost, and the necessary part total amount are shared between the production information storage unit F2 and the investment information storage unit F3.

The ratio information storage unit F4 is a storage medium that stores information representing a ratio between numerical values represented by various pieces of information included in the storage unit F. In this example, the ratio information includes a ratio of a necessary part or the number of man-hours invested in the number of products to the number of products and a ratio of the number of necessary parts of each acquisition path to the number of necessary parts. Further, in an information setting stage, for example, when a single product (model 1) is produced and it is determined that a work burden required for the work item "adjustment" is smaller than that in a normal case, the number of man-hours may be represented by a decimal number.

The domain information storage unit F5 is a storage medium that stores information related to a domain generated in various domain generating processes which will be described later. In this example, the domain information storage unit F5 includes an activity amount domain for managing information related to an activity amount, a unit cost domain for managing information related to a unit cost, and an individual total amount domain for managing information related to total amount (a cost total amount) of each product. Each domain will be described in conjunction with an individual total amount domain generating process and the like executed by the control unit C for easy understanding.

Next, an operation of the cost calculation device 10 of the invention will be described with reference to the drawings. A detailed description of a process which is not particularly related to the invention may not be made.

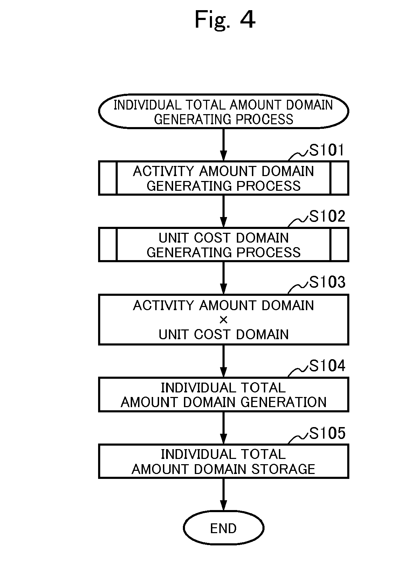

Fig. 4 is a flowchart illustrating an example of an individual total amount domain generating process executed by the cost calculation device 10. In the individual total amount domain generating process, a process of generating information used to configure a structure that can hold an activity amount, a unit cost, a total amount, and a configuration ratio thereof in a layered structure at a mapping position as an activity amount link structure is executed according to the calculation program stored in the storage unit F on the basis of various pieces of information included in the storage unit F and various pieces of information input through the input unit 12.

In the individual total amount domain generating process, the control unit C first executes an activity amount domain generating process (step S101), generates an activity amount domain, and stores the generated activity amount domain in the domain information storage unit F5.

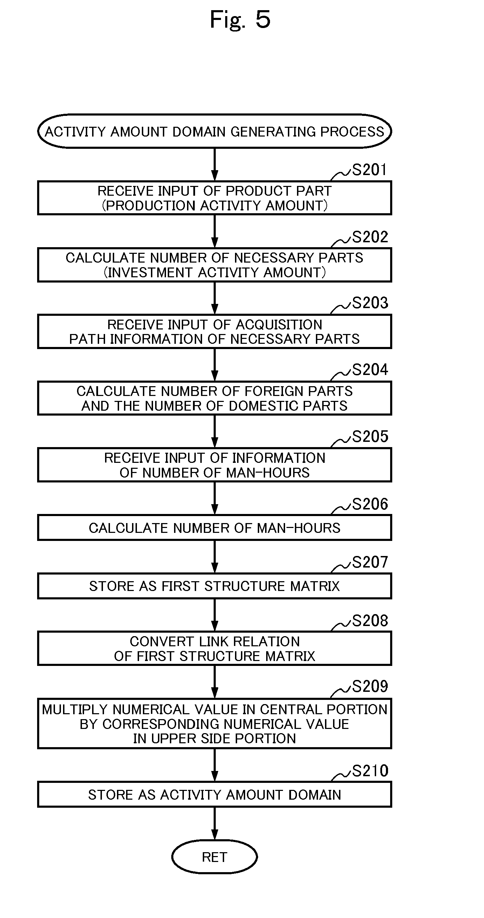

Fig. 5 is a flowchart illustrating an example of the activity amount domain generating process in this example. In the activity amount domain generating process, the control unit C executes a process of generating an activity amount domain on the basis of input information.

Fig. 6 is an explanatory diagram to describe a completion state of a first structure matrix 100 which is the basis of the activity amount domain in this example. As illustrated in Fig. 6, in the first structure matrix 100, item lists (a product list and a part list) of a product group and a part group as production information, and the number of products and the number of necessary parts which correspond to each item are arranged in an upper side portion 101. Further, item lists (a part list and a work list) of a part group and a work group as investment information, and the number of necessary parts, the number of foreign parts, the number of domestic parts, and the number of man-hours which correspond to each item are arranged in a left side portion 102. Further, a matrix (that is, a matrix in which investment information is arranged as a row item, production information is arranged as a column item, and a ratio is set as a matrix element. Here, a ratio of the number of necessary parts to the number of products and a ratio of the number of man-hours to the number of products are used) configured on the basis of ratio information associated with the upper side portion 101 and the left side portion 102 is arranged in a central portion 103. In the structure matrix 100, since a block 101b and a block 102a having the same item are included in the upper side portion 101 and the left side portion 102, respectively, information of the blocks are shared.

Next, a description will be made in connection with an example in which the control unit C generates an individual total amount domain by sequentially receiving an input of information which is not stored in the storage unit F among the production information, the investment information, and the ratio information through the input unit 12 from the user and calculating an associated numerical value based on the received information.

In the activity amount domain generating process, the control unit C first performs a process of generating a first structure matrix through the structure matrix generating unit 14. The control unit C extracts the first structure matrix 100 from the structure matrix information storage unit F1, outputs an input request for product part information to the user through the output unit 13, receives an input of product part information, and stores the product part information in the ratio information storage unit F4 as the ratio information (step S201). Here, the product part information is information including the type and the number of parts configuring a single product (model) represented by a product item. In this example, ratio information representing a ratio of the number of necessary parts to the number of products is used as the product part information.

When the input unit 12 receives the input of the product part information, the control unit C calculates the number of necessary parts through the calculating unit 11 (step S202). In this example, the calculating unit 11 inputs the product part information to a block 103a of the central portion 103, calculates the product of each number of products set to a block 101a of the upper side portion 101 and the product part information input to the block 103a as the number of necessary parts, and inputs the calculated value at the position of a corresponding item in the block 102a in the left side portion 102. Since information is shared between the block 102a and the block 101b, the value input to the block 102a at this time is input even to the block 101b.

When the number of necessary parts is calculated, the control unit C receives an input of a ratio of the number of foreign parts and the number of domestic parts (acquisition path information) in the necessary parts (step S203). When the input unit 12 receives an input of the acquisition path information, the control unit C calculates the product of the number of necessary parts and a numerical value represented by the acquisition path information through the calculating unit 11 and thereby derives the number of foreign parts and the number of domestic parts of each part item (step S204).

When the number of foreign parts and the number of domestic parts are derived, the control unit C receives an input of a work item and the number of works (information of the number of man-hours) necessary to produce a single product represented by a product item (step S205). In this example, ratio information representing a ratio of the number of man-hours to the number of products is used as the information of the number of man-hours.

When the input unit 12 receives the input of the information of the number of man-hours, the control unit C calculates the product of the number of products and a numerical value represented by the information of the number of man-hours through the calculating unit 11 and thereby derives the number of man-hours of each work item (step S206). It may be configured to receive the input of the product part information and the information of the number of man-hours at a time.

When the number of man-hours is derived, the control unit C inputs the derived number of man-hours to the first structure matrix, and stores structure matrix information representing the completed first structure matrix in the structure matrix information storage unit F1 (step S207).

When the first structure matrix information is stored, the control unit C executes a process of generating an activity amount domain through the domain generating unit 15. In other words, the control unit C causes the domain generating unit 15 to extract the first structure matrix from the structure matrix information storage unit F1, convert a link relation of a horizontal sum of vertical products into a link relation of a horizontal sum (step S208), multiply each numerical value input to the central portion 103 by a numerical value input to a corresponding item (in the same column) in the upper side portion 101 (step S209), and store the multiplication result in the domain information storage unit F5 as the activity amount domain (step S210).

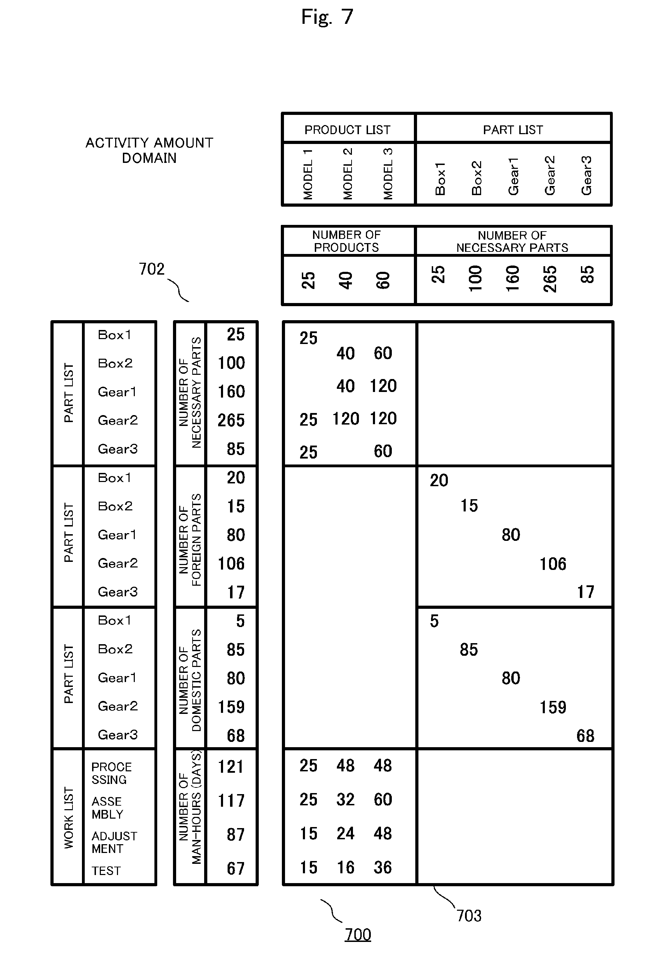

Fig. 7 is an explanatory diagram illustrating an activity amount domain 700 stored in the domain information storage unit F5 by the control unit C at this time. As illustrated in Fig. 7, the activity amount domain 700 is configured with information representing an activity amount.

When the activity amount domain is stored, the control unit C proceeds to step S102 in the individual total amount domain generating process (see Fig. 4).

In the individual total amount domain generating process, when the activity amount domain is generated by the activity amount domain generating process, the control unit C executes a unit cost domain generating process (step S102).

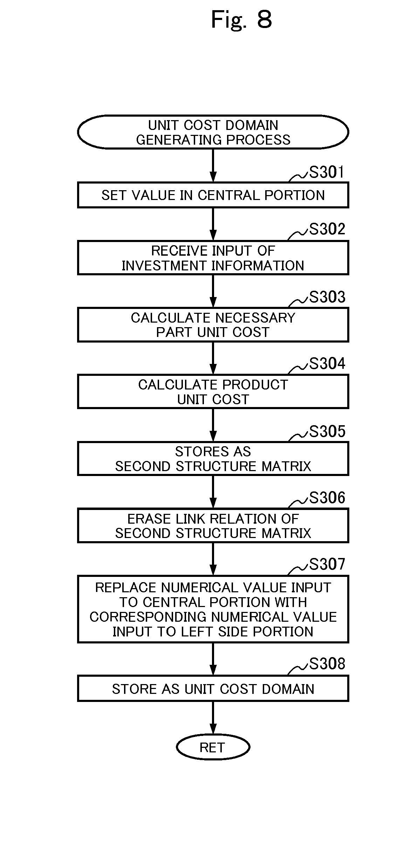

Fig. 8 is a flowchart illustrating an example of the unit cost domain generating process in this example. In the unit cost domain generating process, the control unit C executes a process of generating a unit cost domain on the basis of input information.

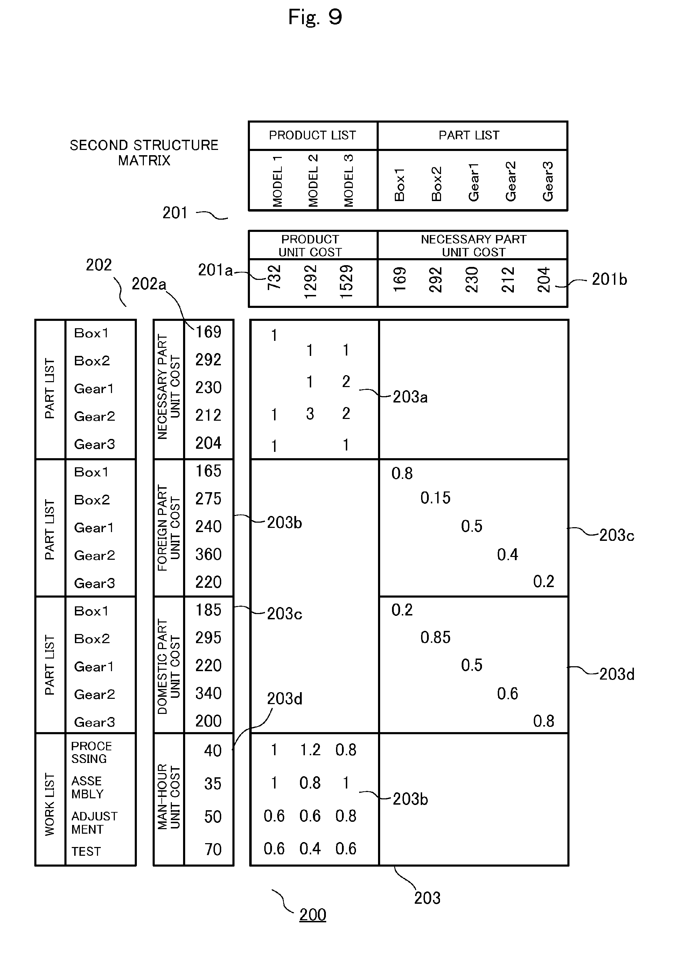

Fig. 9 is an explanatory diagram to describe a completed state of a second structure matrix 200 which is the basis of the unit cost domain in this example. As illustrated in Fig. 9, in the second structure matrix 200, the same item lists (a product list and a part list) as in the first structure matrix, and a product unit cost and a necessary part unit cost which correspond to each item are arranged in an upper side portion 201. Further, the same item lists (a part list and a work list) as in the first structure matrix, and a necessary part unit cost, a foreign part unit cost, a domestic part unit cost, and a man-hour unit cost which correspond to each item are arranged in a left side portion 202. Further, a matrix (that is, a matrix in which investment information is arranged as a row item, production information is arranged as a column item, and a ratio is set as a matrix element. Here, a ratio of the number of necessary parts to the number of products and a ratio of the number of man-hours to the number of products are used) configured on the basis of ratio information associated with the upper side portion 201 and the left side portion 202 is arranged in a central portion 203.

In the unit cost domain generating process, the control unit C first extracts the second structure matrix 200 from the structure matrix information storage unit F1, and sets a copy of the central portion 103 of the first structure matrix 100 when the information of the number of man-hours is input through the activity amount domain generating process to the central portion 203 (step S301) (see Figs. 5 and 6).

When the value of the central portion 203 is set, the control unit C outputs an input instruction of the investment information through the output unit 13, and then receives an input of the investment information (step S302). In this example, a description will be made in connection with an example in which input of information representing a foreign part unit cost, a domestic part unit cost, and a man-hour unit cost is received as the investment information.

When the input unit 12 receives an input of the investment information, the control unit C calculates a necessary part unit cost through the calculating unit 11 (step S303). In this example, the calculating unit 11 sets the input investment information to blocks 202b and 202c of the left side portion, calculates a total sum of the products of the set investment information and the numerical values set to the blocks 203c and 203d of the central portion for each row as a necessary part unit cost, and inputs the calculated value at the position of a corresponding item of a block 201b of the upper side portion. In the second structure matrix of this example, since information is shared between the block 201b and the block 202a of the left side portion, the same numerical value is input even to the block 202a.

When the necessary part unit cost is calculated, the control unit C causes the calculating unit 11 to calculate a product unit cost of each product based on the necessary part unit cost and the man-hour unit cost, and the product part information and the information of the number of man-hours (the numerical values of the blocks 203a and 203b of the central portion in Fig. 9) as the ratio information set to the central portion 203 (step S304).

When the product unit cost is calculated, the control unit C inputs the calculated product unit cost to the second structure matrix, and stores structure matrix information representing the completed second structure matrix in the structure matrix information storage unit F1 (step S305).

When the second structure matrix information is stored, the control unit C executes a process of generating an activity amount domain through the domain generating unit 15. In other words, the control unit C causes the domain generating unit 15 to extract the second structure matrix and erase a link relation of a vertical sum of horizontal products (step S306), and causes the calculating unit 11 to replace the numerical value input to the central portion 203 with a numerical value (that is, a numerical value input to the same row) of a corresponding item in the left side portion 202 (step S307), and store the replaced numerical value in the domain information storage unit F5 as a unit cost domain (step S308).

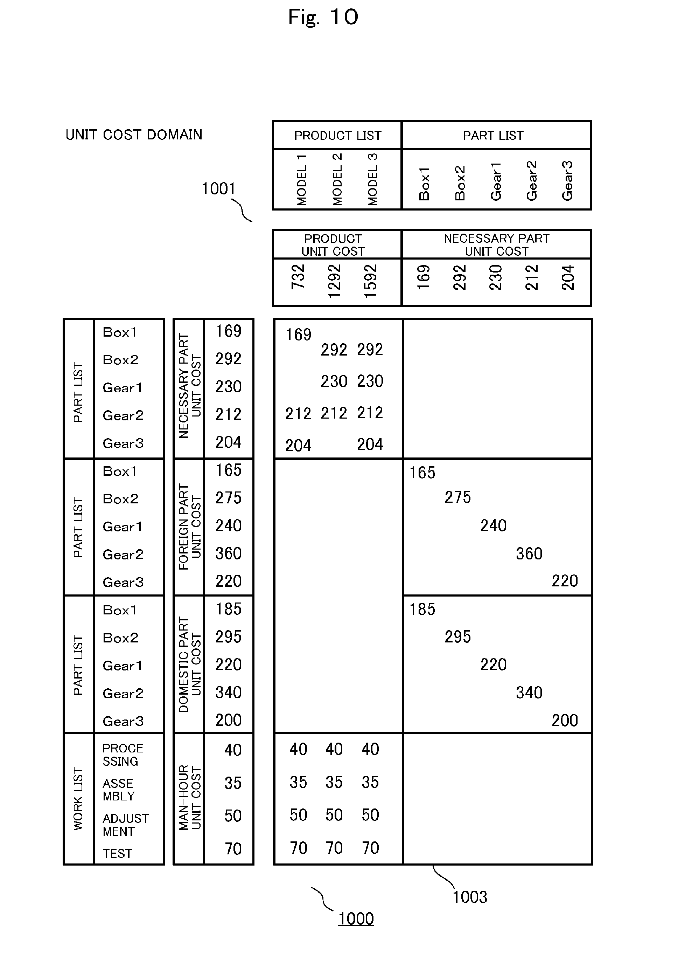

Fig. 10 is an explanatory diagram to describe a unit cost domain 1000 stored in the domain information storage unit F5 by the control unit C as this time. As illustrated in Fig. 10, the unit cost domain 1000 is configured with a value representing a unit cost such as a product part.

When the unit cost domain is stored, the control unit C proceeds to step S103 in the individual total amount domain generating process (see Fig. 4).

In the individual total amount domain generating process, when the unit cost domain is generated by the unit cost domain generating process, the control unit C causes the domain generating unit 15 to integrate the activity amount domain 700 and the unit cost domain 1000 and generates an individual total amount domain. Specifically, an individual total amount domain is generated by calculating the product of corresponding numerical values (numerical values located to meet and overlap each other in the two domains. That is, numerical values are present in the same row and the same column. The values are matrix elements represented by the same row item and the same column item) of the activity amount domain 700 and the unit cost domain 1000 (step S104).

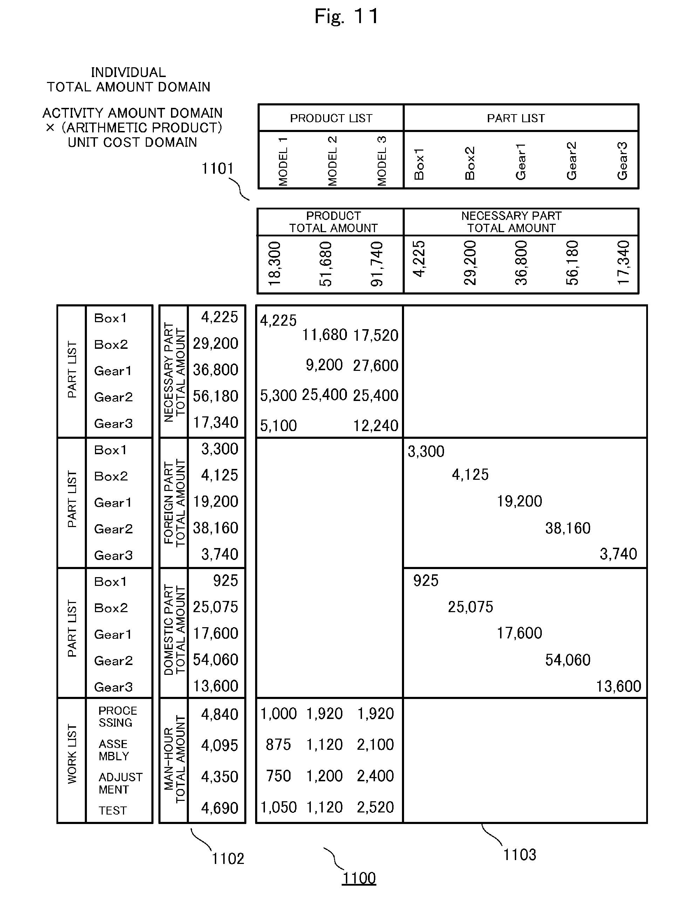

Fig. 11 is an explanatory diagram illustrating an individual total amount domain 1100 generated at this time. As illustrated in Fig. 11, in the individual total amount domain 1100, the same item lists (a product list and a part list) as in the activity amount domain and the unit cost domain, and a product total amount and a necessary part total amount which correspond to each item are arranged in an upper side portion 1101. Further, the same item lists (a part list and a work list) as in the activity amount domain and the the unit cost domain, and a necessary part total amount, a foreign part total amount, a domestic part total amount, and a man-hour total amount which correspond to each item are arranged in a left side portion 1102. Further, a matrix representing a breakdown of the investment total amount in the production information (that is, a breakdown of a necessary part total amount and a man-hour total amount of each item on a product total amount of a product represented by each product item, and a breakdown of a foreign part total amount and a domestic part total amount of each item on a part total amount of a part represented by each part item) is arranged in a central portion 1103.

When the individual total amount domain is generated, the control unit C stores the generated individual total amount domain in the domain information storage unit F5 (step S105), and then the process ends.

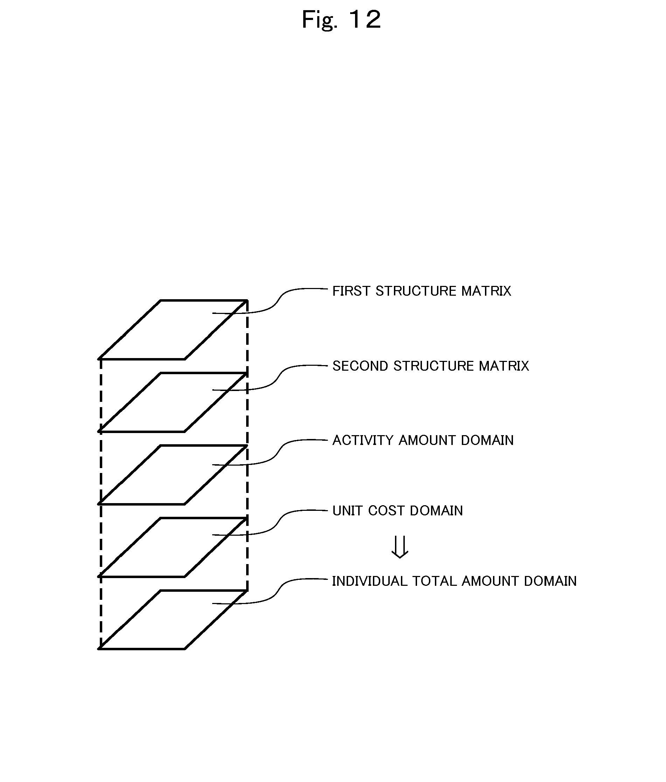

The activity amount domain 700, the unit cost domain 1000, and the individual total amount domain 1100 which are generated by a series of individual total amount domain generating processes are stored in the domain information storage unit F5 by being associated with one another. As a result, the control unit C can update or output various pieces of information related to a cost at the user's request. In other words, in this example, for example, in the domain information storage unit F5, a plurality of domains representing an activity amount, a unit cost, a total amount, and a configuration ratio thereof can be managed as a calculation structure in which the domains are held, in a layered structure, at a mapping position on a first structure matrix and a second structure matrix representing a link structure of an activity amount of a management unit as illustrated in Fig. 12.

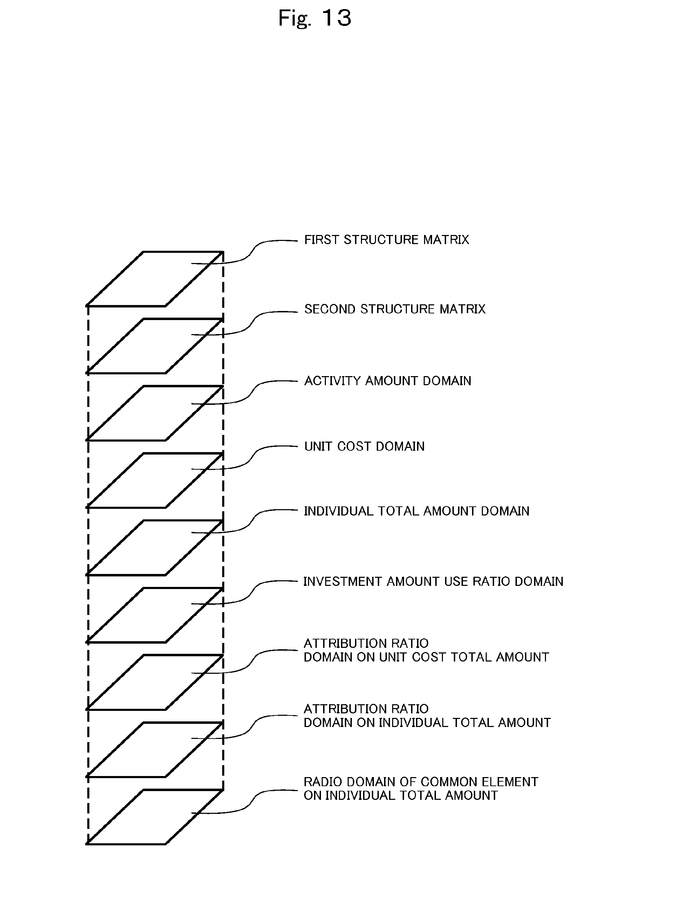

For example, the calculation structure may be configured to further include an investment amount use ratio domain, an attribution ratio domain on a unit cost total amount, an attribution ratio domain on an individual total amount, and a common element ratio domain on an individual total amount as illustrated in Fig. 13. Through this configuration, information desired by the user can be appropriately output rapidly.

Next, each domain in this case will be described.

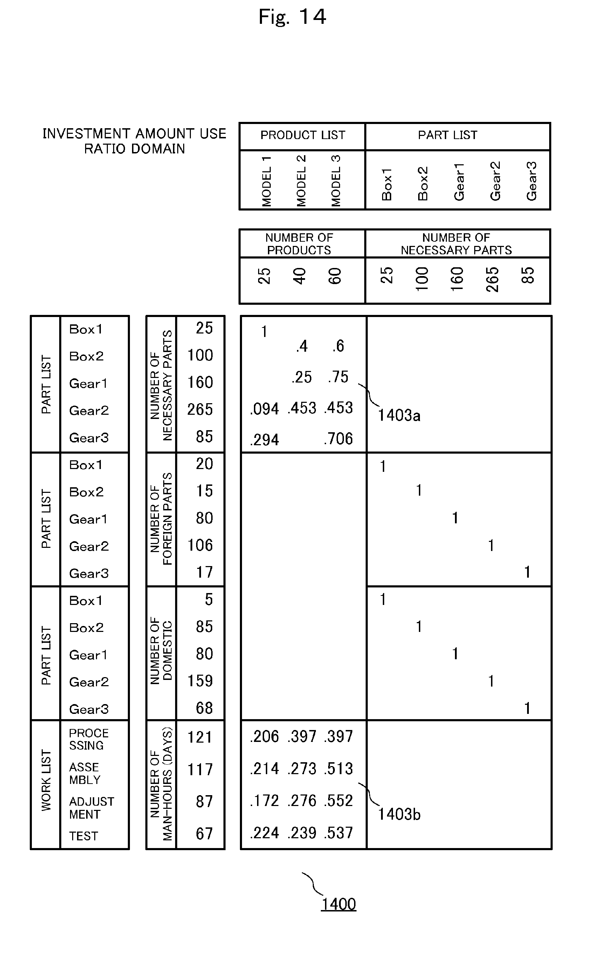

Fig. 14 is an explanatory diagram of an investment amount use ratio domain 1400 in this example. As illustrated in Fig. 14, the investment amount use ratio domain 1400 includes information representing a use ratio of an investment amount (for example, the number of necessary parts) on each product represented by the product item in blocks 1403a and 1403b of a central portion. The investment amount use ratio domain 1400 is generated such that the control unit C causes the domain generating unit 15 to extract the activity amount domain 700 (see Fig. 7) from the domain information storage unit F5 and then to multiply each numerical value included in a central portion 703 by a reciprocal of a corresponding value in a left side portion 702 (a value arranged in the same row as each value set to the central portion 703) (to calculate a quotient).

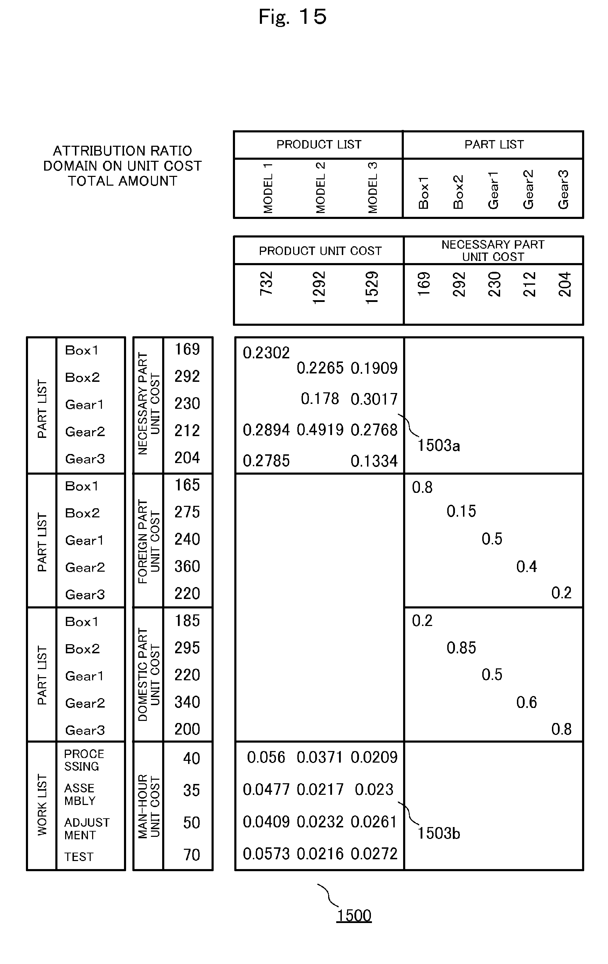

Fig. 15 is an explanatory diagram to describe an attribution ratio domain 1500 on the unit cost total amount in this example. As illustrated in Fig. 15, the attribution ratio domain 1500 on the unit cost total amount includes information representing a ratio of a necessary part unit cost or the like to a unit cost of each product in blocks 1503a and 1503b of a central portion. The attribution ratio domain 1500 on the unit cost total amount is generated such that the control unit C causes the domain generating unit 15 to extract the unit cost domain 1000 (see Fig. 10) from the domain information storage unit F5 and then to multiply each numerical value included in a central portion 1003 by a reciprocal of a corresponding value in an upper side portion 1001 (a value arranged in the same row as each value set to the central portion 1003).

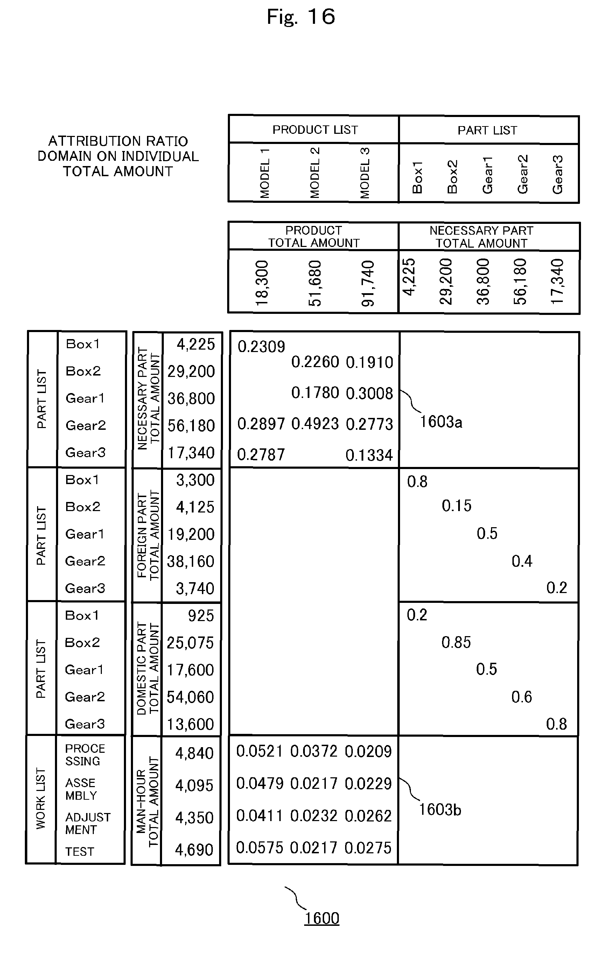

Fig. 16 is an explanatory diagram to describe an attribution ratio domain 1600 on an individual total amount in this example. As illustrated in Fig. 16, the attribution ratio domain 1600 on the individual total amount includes information representing a ratio of each necessary part total amount and a man-hour total amount to a total amount of each product represented by a product item and information representing a ratio of a foreign product total amount and a domestic product total amount to a necessary part total amount in blocks 1603a and 1603b of a central portion, respectively. The attribution ratio domain 1600 on the individual total amount is generated such that the control unit C causes the domain generating unit 15 to extract the individual total amount domain 1100 (see Fig. 11) from the domain information storage unit F5 and then to multiply each numerical value included in the central portion 1103 by a reciprocal of a corresponding numerical value in the upper side portion 1101 (a value arranged in the same row as each value set to the central portion 1103).

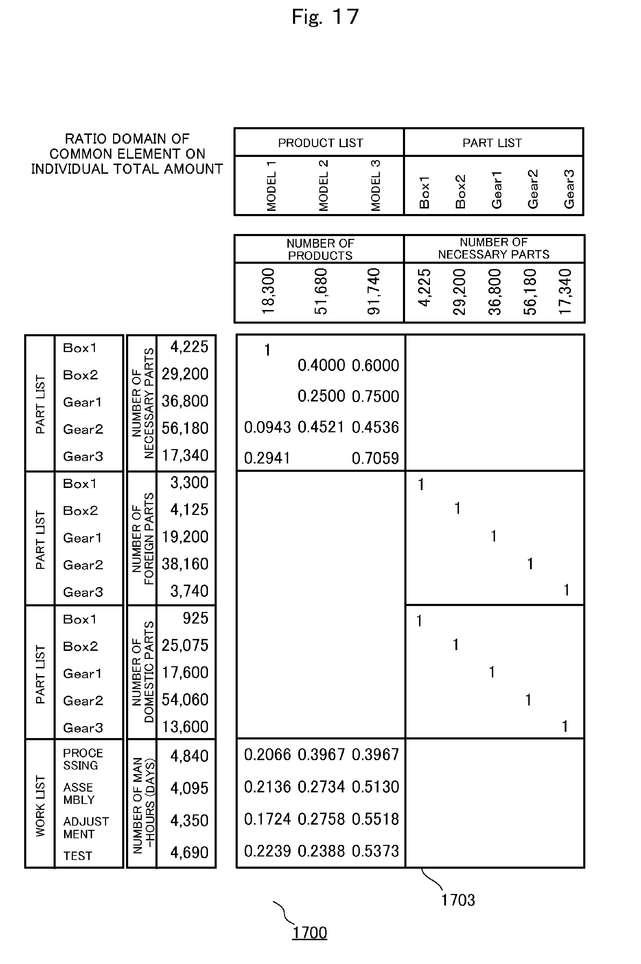

Fig. 17 is an explanatory diagram to describe a common element ratio domain 1700 on an individual total amount in this example. As illustrated in Fig. 17, the common element ratio domain 1700 on the individual total amount includes information representing a sorting ratio to each product represented by a product item in the necessary part total amount and the man-hour total amount in blocks 1703a and 1703b of a central portion. The common element ratio domain 1700 on the individual total amount is generated such that the control unit C causes the domain generating unit 15 to extract the individual total amount domain 1100 (see Fig. 11) from the domain information storage unit F5 and then to multiply each numerical value included in the central portion 1103 (see Fig. 11) by a reciprocal of a corresponding value in the left side portion 1102 (see Fig. 11) (a value arranged in the same row as each value set to the central portion 1103).

As described above, in the above embodiment, the cost calculation device 10 executes a cost calculation using a principle of a structure matrix including an upper side portion, a left side portion, and a central portion and includes the production information storage unit F2 that stores production information in which a production item, a production activity amount, and a production unit cost are associated, the investment information storage unit F3 that stores investment information in which an investment item, an investment activity amount, and an investment unit cost are associated, and the ratio information storage unit F4 that stores ratio information representing a ratio of the investment activity amount invested in the production activity amount to the production activity amount. The cost calculation device 10a has a predetermined link relation (for example, a link relation of a horizontal sum of vertical products and a link relation of a vertical sum of horizontal products). The cost calculation device 10 is configured to generate a structure matrix in which production information is arranged in an upper side portion, investment information is arranged in a left side portion, and ratio information is arranged in a central portion, to generate a domain using the structure matrix, and to output the generated domain. Further, the cost calculation device 10 is configured to generate the first structure matrix 100 that has a link relation of a horizontal sum of vertical products and in which an production activity amount (for example, the number of products and the number of necessary parts) is arranged in an upper side portion, an investment activity amount (for example, the number of necessary parts, the number of foreign parts, the number of domestic parts, and the number of man-hours) is arranged in a left side portion, and a matrix having a ratio (for example, a ratio of the number of necessary parts to the number of products and a ratio of the number of man-hours to the number of products) as an element is arranged in a central portion. Further, the cost calculation device 10 is configured to generate the second structure matrix 200 that has a link relation of a vertical sum of horizontal products and in which a production unit cost (for example, a product unit cost and a necessary part unit cost) is arranged in an upper side portion, an investment unit cost (for example, a necessary part unit cost, a foreign part unit cost, a domestic part unit cost, and a man-hour unit cost) is arranged in a left side portion, and a matrix having a ratio (for example, the product part information and the information of the number of man-hours) as an element is arranged in a central portion. Further, when the domain is generated, the activity amount domain 700 representing an investment amount of an investment activity amount on a production activity amount is generated using the first structure matrix 100. Further, the unit cost domain 1000 representing a unit cost of an investment item (for example, a part and a work) invested in an production item (for example, a product) is generated using the second structure matrix 200. The individual total amount domain 1100 representing a production total amount, an investment total amount, and a breakdown of an investment total amount in a production total amount is generated using the activity amount domain 700 and the unit cost domain 1000. Thus it is possible to efficiently calculate the three values of the activity amount, the unit cost, and the total amount with high versatility while having additional features. Further, a cost calculation can be performed by a simple matrix calculation having a low processing load, and an output can be collectively performed.

In other words, when an activity amount in a management structure is expressed by a link of an activity amount ratio, a unit cost, a cost total amount, and a configuration ratio of each element in a cost total amount can be simply calculated for each activity hub (for example, for each acquisition route of a part when a part is acquired by a plurality of routes), a variable expense (including a variable fixed expense) can be appropriately managed and changed, and an application to a complicated calculation, for example, to pursue a cost difference can be made. As a result, by disseminating the fact that an "activity amount," a "unit cost," and a "total amount" can be set to be large and (collectively) provided, a cost can be reduced, a cost calculation can be smoothly operated, and a wall between human resources or between organizations (for example, a so-called wall between "arts" and "sciences") can be reduced to realize a seamless organization operation.

Further, through possession of knowledge of a simple structure of the structure matrix and a sequentially expanded structure of a casual requirement amount of an activity amount, it is possible to precisely associate and manage domains having similarity (for example, a hierarchical structure, see Fig. 12), and for an activity amount ratio, an activity amount, a unit cost, an individual total amount, a ratio on vertical and horizontal sums thereof, and the like, a casual structure of a cost occurrence and a numerical value thereof can be output according to an occurrence cause and effect of an activity amount. Further, since the output form is a form which is intuitively recognized by human (for example, in the form of a table), a management item of a field operation can be simply associated with information provided by a computer. As a result, even in the context of environment and energy, it is possible to delicately calculate a monetary value on an activity amount related to a company activity, an environmental load, energy consumption, a countermeasure such as a recycling activity, and the like.

Further, since the structure is easily understood, for addition or deletion of a product or a work item, a change is made in a developed program. Thus, a system device can be configured so that a huge amount of time and effort or labor is not required in a decipherment thereof, a change, redevelopment, a test, or the like. Further, a prompt response to a change request can be performed.

Further, a cost calculation can be performed such that information is treated in units of children of each domain (units of blocks) and a calculation group of a simple matrix calculation is treated to reduce a processing load. Further, calculation values of respective domains can be output together.

Further, a seamless integration system can be constructed by closely and smoothly combining a monetary value and a non-monetary value which have been a barrier in constructing and operating an integrated business management system of a social model, an economic model, and an entity.

Further, in the above embodiment, the cost calculation device 10 includes the structure matrix storage unit F1 that stores a plurality of structure matrices (for example, the structure matrices M10, M20, and M30), and a structure matrix (for example, the structure matrices M100, M200, and M300) in which a plurality of structure matrices are combined is included among the plurality of structure matrices. Thus, a structure matrix appropriate for information to manage can be used.

Further, in the above embodiment, the cost calculation device 10 is configured to generate the activity amount domain 700 by calculating the product of an element configuring the matrix arranged in the central portion 103 and the production activity amount arranged in the upper side portion 101 in the first structure matrix 100, replacing the matrix having the ratio arranged in the central portion 103 as an element in the first structure matrix 100 with a matrix having the product as an element, and converting the link relation of the horizontal sum of vertical products into a link relation of a horizontal sum, generate the unit cost domain 1000 by replacing an element configuring the matrix arranged in the central portion 203 in the second structure matrix 200 with the corresponding investment unit cost, and erasing a link relation of a vertical sum of horizontal products, and generate the individual total amount domain 1100 by calculating the product of corresponding values of the activity amount domain 700 and the unit cost domain 1000. Further, a cost calculation can be performed by a simple calculation process. Further, a configuration is made to output information (the activity amount domain or the unit cost domain) calculated by the calculation process. Thus, a cause-and-effect relation of a cost driver that affects a cost can be easily investigated, and it is possible to efficiently follow a change in the activity amount acting on the cost and perform processing.

Further, in the above embodiment, the production activity amount includes the number of products, the investment activity amount includes the number of necessary parts and the number of man-hours, the production unit cost includes a product unit cost, the investment unit cost includes a necessary part unit cost and a man-hour unit cost, a used amount of an investment amount in the production amount includes a breakdown of the number of necessary parts of each product and a breakdown of an activity amount of each product, the production total amount includes a product total amount, the investment total amount includes a necessary part total amount and a man-hour total amount, and the breakdown of the investment total amount in the production total amount includes a breakdown of the necessary part total amount and the man-hour total amount on the product total amount of each production item. Through a simple matrix calculation, it is possible to collectively calculate and output the product total amount, the necessary part total amount, the foreign part total amount, the domestic part total amount, man-hour total amount, the breakdown of the necessary part total amount of each product, the breakdown of the foreign part total amount and the domestic part total amount in each necessary part, and the breakdown of the man-hour total amount of each product.

Even though not particularly mentioned in the above embodiment, the structure matrix generating unit 14 may be configured to have a structure matrix editing function of editing a structure matrix which has been generated once. In other words, a new structure matrix may be generated by combining, converting, or separating a plurality of structure matrices. Through this configuration, a link of a structure matrix can be reduced or increased, and versatility can be improved.

In this case, for example, the structure matrix generating unit 14 may analyze information of each portion configuring a structure matrix which is an editing target and a link relation thereof as described on the structure matrices M100 and M200 (see Figs. 2 and 3). Then, when a plurality of matrices having a block for managing the same information in a left side portion and an upper side portion are present, for example, the structure matrix generating unit 14 may generate a new structure matrix in which the plurality of matrices are combined.

In other words, for example, a third structure matrix may be generated such that the first structure matrix 100 is combined with a structure matrix in which the number of man-hours is arranged in an upper side portion as an investment amount, the number of foreign works and the number of domestic works are arranged in a left side portion, a matrix having ratios of the number of foreign works and the number of domestic works to the number of man-hours as elements is arranged in a central portion, and that has a link relation of a horizontal sum of vertical products. Further, various domains may be generated in the second structure matrix 200 by generating a fourth structure matrix such that a work unit cost is arranged in an upper side portion, a foreign work unit cost and a domestic work unit cost are arranged in a left side portion, and the same matrix as in the central portion of the third structure matrix is arranged in a central portion and appropriately changing the individual total amount domain generating process using the third and fourth structure matrices (that is, by changing information receiving input, changing the type of domain to generate, or the like).

Further, the above embodiment has been described in connection with the calculation structure including the activity amount domain, the unit cost domain, and the individual total amount domain (see Figs. 12 and 13). However, the structure of the calculation structure is not limited to the above example, and a structure having a link relation of numerical values representing various pieces of information related to the cost is desirable. In other words, for example, for the activity amount domain 700, a plurality of unit cost domains having different characteristics (for example, domains obtained by replacing portions related to the man-hour unit cost in the unit cost domain 1000 and the unit cost domain 1000 with numerical values representing a "variable processing cost unit cost," a "fixed processing cost unit cost," or the like) which share a specific portion (for example, a product item, a part item or the like) of the activity amount domain 700 may be provided, and an individual total amount domain corresponding to various unit cost domains and various ratio domains generated based thereon (for example, the investment amount use ratio domain. See Fig. 14) may be provided.

Even though not particularly mentioned in the above embodiment, the cost calculation device 10 may generate and output a single table in which various domains configuring a calculation structure are integrated. In this case, for example, when domains having different items are included in the calculation structure, it is desirable to make an adjustment by arranging an empty block. Further, since various domains are different in a numerical value configuring a matrix arranged in a central portion, for example, various symbols having different meanings may be arranged instead of a numerical value.

Even though not mentioned in the above embodiment, the cost calculation device 10 can be applied to provision of detailed business management materials, external reporting, and a system calculation for a tax report obligation by sharing the same activity amount domain according to each characteristic such as a material cost, a processing cost, or a fixed processing cost and generating a unit cost and an individual total amount cost.

### Industrial Applicability

The present invention is industrially useful in a type of industry that performs a cost reduction, a smooth operation of a cost calculation, and a seamless organization operation that reduces a wall between human resources or between organizations (for example, a so-called wall between "arts" and "sciences").

### Reference Signs List

C Control unit
F Storage unit
F1 Structure matrix information storage unit
F2 Production information storage unit
F3 Investment information storage unit
F4 Ratio information storage unit
F5 Domain information storage unit
B Bus
10 Cost calculation device
11 Calculating unit
12 Input unit
13 Output unit
14 Structure matrix generating unit
15 Domain generating unit
100 First structure matrix
200 Second structure matrix
700 Activity amount domain
1000 Unit cost domain
1100 Individual total amount domain
1400 Investment amount use ratio domain
1500 Attribution ratio domain on unit cost total amount
1600 Attribution ratio domain on individual total amount
1700 Common element ratio domain on individual total amount

## Claims

1. A cost calculation device that executes a cost calculation using a principle of a structure matrix including an upper side portion, a left side portion, and a central portion, the device comprising:
a production information storage unit for storing production information in which a production item, a production activity amount, and a production unit cost are associated;
an investment information storage unit for storing investment information in which an investment item, an investment activity amount, and an investment unit cost are associated;
a ratio information storage unit for storing ratio information representing a ratio of the investment activity amount invested in the production activity amount to the production activity amount;
a structure matrix generating unit for generating a structure matrix in which the production information is arranged in the upper side portion, the investment information is arranged in the left side portion, and the ratio information is arranged in the central portion, the structure matrix having a predetermined link relation;
a domain generating unit for generating a domain using the structure matrix; and
a domain output unit for outputting the domain generated by the domain generating unit,
the structure matrix generating unit including generating a first structure matrix in which the production activity amount is arranged in an upper side portion, the investment activity amount is arranged in a left side portion, and a matrix including the ratio as an element is arranged in a central portion, the first matrix having a link relation of a horizontal sum of vertical products, and
generating a second structure matrix in which the production unit cost is arranged in an upper side portion, the investment unit cost is arranged in a left side portion, and a matrix including the ratio as an element is arranged in a central portion, the second matrix having a link relation of a vertical sum of horizontal products, and
the domain generating unit including
generating an activity amount domain representing an investment amount of the investment activity amount on the production activity amount using the first structure matrix,
generating a unit cost domain representing a unit cost of an investment item invested in the production item using the second structure matrix, and
generating an individual total amount domain that represents a production total amount, an investment total amount, and a breakdown of the investment total amount in the production total amount using the activity amount domain and the unit cost domain.

2. The cost calculation device according to claim 1, further comprising:
a structure matrix storage unit for storing a plurality of structure matrices,
wherein a structure matrix configured such that a plurality of structure matrices are combined is included among the plurality of structure matrices.

3. The cost calculation device according to claim 1 or 2, wherein the domain generating unit includes:
generating the activity amount domain by calculating a product of an element configuring the matrix arranged in the central portion and the production activity amount arranged in the upper side portion in the first structure matrix, replacing the matrix having the ratio arranged in the central portion as an element in the first structure matrix with a matrix having the product as an element, and converting the link relation of the horizontal sum of vertical products into a link relation of a horizontal product,
generating the unit cost domain by replacing an element configuring the matrix arranged in the central portion in the second structure matrix with the corresponding investment unit cost, and erasing a link relation of a vertical sum of horizontal products, and
generating the individual total amount domain by calculating a product of corresponding values of the activity amount domain and the unit cost domain.

4. The cost calculation device according to any of claims 1 to 3, further comprising:
a structure matrix editing unit for combining, converting, or separating a plurality of structure matrices and generating a new structure matrix.

5. The cost calculation device according to any of claims 1 to 4,
wherein the production activity amount includes the number of products,
the investment activity amount includes the number of necessary parts and the number of man-hours,
the production unit cost includes a product unit cost, the investment unit cost includes a necessary part unit cost and a man-hour unit cost,
a used amount of an investment amount in the production amount includes a breakdown of the number of necessary parts of each product and a breakdown of an activity amount of each product,
the production total amount includes a product total amount,
the investment total amount includes a necessary part total amount and a man-hour total amount, and
the breakdown of the investment total amount in the production total amount includes a breakdown of the necessary part total amount and the man-hour total amount on the product total amount of each production item.

6. A cost calculation method that executes a cost calculation using a principle of a structure matrix including an upper side portion, a left side portion, and a central portion, the method comprising:
a structure matrix generating process of generating a structure matrix in which production information stored in a production information storage unit that stores production information in which a production item, a production activity amount, and a production unit cost are associated is arranged in an upper side portion, investment information stored in an investment information storage unit that stores investment information in which an investment item, an investment activity amount, and an investment unit cost are associated is arranged in a left side portion, and a matrix having a ratio as an element represented by ratio information stored in a ratio information storage unit that stores ratio information representing a ratio of the investment activity amount invested in the production activity amount to the production activity amount is arranged in a central portion, the structure matrix having a predetermined link relation;
a domain generating process of generating a domain using the structure matrix; and
a domain output process of outputting a domain generated by the domain generating process,
the structure matrix generating process including
generating a first structure matrix in which the production activity amount is arranged in the upper side portion, the investment activity amount is arranged in the left side portion, and a matrix including a ratio represented by the ratio information as an element is arranged in the central portion, the first matrix having a link relation of a horizontal sum of vertical products, and
generating a second structure matrix in which the production unit cost is arranged in the upper side portion, the investment unit cost is arranged in the left side portion, and a matrix including the ratio as an element is arranged in the central portion, the second matrix having a link relation of a vertical sum of horizontal products, and
the domain generating process including
generating an activity amount domain representing an investment amount of the investment activity amount on the production activity amount using the first structure matrix,
generating a unit cost domain representing a unit cost of an investment item invested in the production item using the second structure matrix, and
generating an individual total amount domain that represents a production total amount, an investment total amount, and a breakdown of the investment total amount in the production total amount using the activity amount domain and the unit cost domain.

7. A cost calculation program of operating and controlling a cost calculation device and causing the cost calculation device to execute:
a structure matrix generating process of generating a structure matrix in which production information stored in a production information storage unit that stores production information in which a production item, a production activity amount, and a production unit cost are associated is arranged in an upper side portion, investment information stored in an investment information storage unit that stores investment information in which an investment item, an investment activity amount, and an investment unit cost are associated is arranged in a left side portion, and a matrix having a ratio as an element represented by ratio information stored in a ratio information storage unit that stores ratio information representing a ratio of the investment activity amount invested in the production activity amount to the production activity amount is arranged in a central portion, the structure matrix having a predetermined link relation;
a domain generating process of generating a domain using the structure matrix; and
a domain output process of outputting a domain generated by the domain generating process,
the structure matrix generating process including
generating a first structure matrix in which the production activity amount is arranged in the upper side portion, the investment activity amount is arranged in the left side portion, and a matrix including a ratio represented by the ratio information as an element is arranged in the central portion, the first matrix having a link relation of a horizontal sum of vertical products, and
generating a second structure matrix in which the production unit cost is arranged in the upper side portion, the investment unit cost is arranged in the left side portion, and a matrix including the ratio as an element is arranged in the central portion, the second matrix having a link relation of a vertical sum of horizontal products, and
the domain generating process including
generating an activity amount domain representing an investment amount of the investment activity amount on the production activity amount using the first structure matrix,
generating a unit cost domain representing a unit cost of an investment item invested in the production item using the second structure matrix, and
generating an individual total amount domain that represents a production total amount, an investment total amount, and a breakdown of the investment total amount in the production total amount using the activity amount domain and the unit cost domain.
